# FASCICULE DE BREVET EUROPEEN

(11) **EP 2 663 741 B1**
(45) Date de publication et mention de la délivrance du brevet: **17.12.2014**
(21) Numéro de dépôt: 12702603.7
(22) Date de dépôt: 10.01.2012
(51) Int. Cl.: F01D 25/24, F02K 1/80, B64D 29/08, F02K 1/68

(54) **DISPOSITIF DE LIAISON D'UN CADRE AVANT À UN CARTER DE SOUFFLANTE**
VORRICHTUNG ZUR VERBINDUNG EINES FRONTRAHMENS MIT EINEM LÜFTERGEHÄUSE
DEVICE FOR LINKING A FRONT FRAME TO A FAN CASING

(30) Priorité: 14.01.2011 FR 1150296
(43) Date de publication de la demande: 20.11.2013
(73) Titulaire: Aircelle, 76700 Gonfreville L'Orcher (FR)
(72) Inventeur: LE BOULICAUT, Loïc, F-76610 Le Havre (FR)
(74) Mandataire: Gaillarde, Frédéric F. Ch.
(86) Numéro de dépôt international: PCT/FR2012/050059
(87) Numéro de publication internationale: WO 2012/095600

(56) Documents cités:
- EP-A2- 1 669 553
- FR-A1- 2 291 091
- FR-A1- 2 900 979
- US-A- 2 653 836
- US-A- 3 600 770
- US-A- 4 681 353
- US-A- 5 915 765

## Description

La présente invention se rapporte à un dispositif de liaison d'un cadre avant d'inverseur de poussée à un carter de soufflante ou autre jonctions de même type, et à une nacelle incorporant un tel dispositif.

Comme cela est connu en soi, un ensemble propulsif d'aéronef comprend classiquement un turboréacteur logé à l'intérieur d'une nacelle.

La nacelle présente généralement une structure tubulaire comprenant une entrée d'air en amont du turboréacteur, une section médiane destinée à entourer une soufflante du turboréacteur et son carter, une section aval destinée à entourer la chambre de combustion du turboréacteur et abritant le cas échéant des moyens d'inversion de poussée. Elle peut être terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation (inverseur à portes pivotantes) ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

Afin de supporter les capots mobiles d'inversion et de lier la section aval au reste de la nacelle et notamment à la section médiane par l'intermédiaire du carter de soufflante, la section aval comprend des éléments fixes et notamment des poutres longitudinales liées en amont à un ensemble sensiblement annulaire appelé cadre avant, formé en une ou plusieurs parties entre lesdites poutres longitudinales, et destiné à être fixé à la périphérie du bord aval du carter de la soufflante du moteur.

Ce cadre avant est lié au carter de soufflante par des moyens de fixation généralement de type couteau / gorge comprenant une bride sensiblement annulaire, réalisée en une ou plusieurs, partie, solidaire du cadre avant et venant coopérer avec une rainure en forme de J ou de V. L'ensemble de fixation est couramment désigné sous le terme J-Ring.

Un tel dispositif fonctionne pour des nacelles dites à conduit en C ou en D (D-duct ou C-duct) possédant des demi-capots à ouverture latérale lors d'opérations de maintenance. Voir par example le document FR 2900979.

Un tel dispositif de liaison n'est pas adapté aux nacelles dans lequel la partie arrière est apte à coulisser lors des opérations de maintenance (nacelle dite à conduit en O ou O-duct) vers l'arrière de la nacelle selon une direction sensiblement longitudinale de cette dernière.

En effet, dans une telle configuration de nacelle, il conviendrait de prévoir un ou plusieurs quartiers de la section aval s'ouvrant latéralement de manière à pouvoir écarter la bride des gorges et libérer le cadre avant du carter.

Il existe donc un besoin pour un système de liaison entre la section aval et le carter de soufflante compatible avec une nacelle de type à conduit en O.

Pour ce faire, la présente invention se rapporte à un dispositif de liaison d'un cadre avant d'inverseur de poussée à un carter de soufflante, comprenant :
- au moins une bride de liaison,
- une pièce annulaire de réception de la bride de liaison et solidaire du carter de soufflante,
- une pièce annulaire de réception de la bride de liaison et solidaire du cadre avant,
caractérisé en ce que la bride de liaison est réalisée en au moins deux secteurs de bride, chaque secteur étant monté mobile de manière pivotante entre une position d'engagement dans laquelle la bride vient en prise avec la pièce annulaire de réception du carter de soufflante et la pièce annulaire de réception du cadre avant de manière à les lier, et une position d'ouverture dans laquelle la bride est écartée radialement de la pièce annulaire de réception du carter de soufflante et de la pièce annulaire de réception du cadre avant de manière à permettre un écartement longitudinal du carter de soufflante et du cadre avant.

Il convient de noter qu'on pourra prévoir indifféremment que la partie coulissante est aussi bien le cadre avant que le carter de soufflante d'inverseur de poussée.

Ainsi en prévoyant une bride montée légèrement pivotante radialement de manière à engager ou dégager le cadre avant du carter de soufflante, il est possible de conserver une ouverture de la section aval de la nacelle selon une direction longitudinale de cette dernière.

Avantageusement, le secteur est monté pivotant autour d'un axe sensiblement longitudinal situé au niveau d'une extrémité dudit secteur de bride.

De manière préférentielle, le secteur est monté pivotant par l'intermédiaire d'une roue, ledit secteur étant rattachée à la roue de manière légèrement excentrée par rapport à l'axe de pivotement. Ainsi, le point d'attache pivotant du secteur de bride est également écarté des pièces annulaires de réception ce qui facilite un dégagement complet.

Selon une première variante de réalisation, la bride pivotante est montée sur le cadre avant.

Selon une deuxième variante de réalisation, la bride pivotante est montée sur le carter de soufflante.

De manière préférentielle, le secteur de bride mobile est associé à au moins une coulisse de guidage. La présence de coulisses de guidage permet de maitriser l'ouverture de la bride ce qui permet notamment la motorisation de son ouverture et fermeture.

Selon un mode de réalisation préféré, la bride de liaison est réalisée en deux secteurs sensiblement hémi-périphériques.

Avantageusement, les secteurs sont reliés par une jonction coulissante. La jonction coulissante pourra notamment être équipée de moyens de serrage visant à assurer le maintien de la bride en position de verrouillage.

De manière avantageusement complémentaire, les secteurs sont montés pivotants à l'encontre d'au moins un moyen de retour élastique tendant à aider le pivotement du secteur vers sa position écartée ou engagée. Le moyen de retour élastique pourra être de type mécanique automatique, tel qu'un ressort par exemple ou de type à actionnement notamment de type, tel qu'un verrou actionné hydrauliquement ou électriquement, par exemple.

La présente invention se rapporte également à un ensemble propulsif comprenant un turboréacteur logé à l'intérieur d'une nacelle, ladite nacelle comportant une section aval rattaché à un carter de soufflante du turboréacteur à l'aide d'au moins un dispositif de liaison selon l'invention.

La présente invention sera mieux comprise à la lumière de la description détaillée qui suit en regard du dessin annexé dans lequel :
- la figure 1 est une vue d'ensemble d'une nacelle de turboréacteur ;
- la figure 2 est une vue partielle en coupe longitudinale d'un dispositif de liaison selon l'invention entre un carter de soufflante et un cadre avant d'une section arrière de la nacelle de la figure 1, le dispositif de liaison étant en position d'engagement,
- la figure 3 est une vue d'ensemble du dispositif de liaison de la figure 2 ;
- la figure 4 est une vue similaire à la figure 2, le dispositif de liaison étant en position d'ouverture ;
- la figure 5 est une vue similaire à la figure 3, le dispositif de liaison étant en position d'ouverture ;

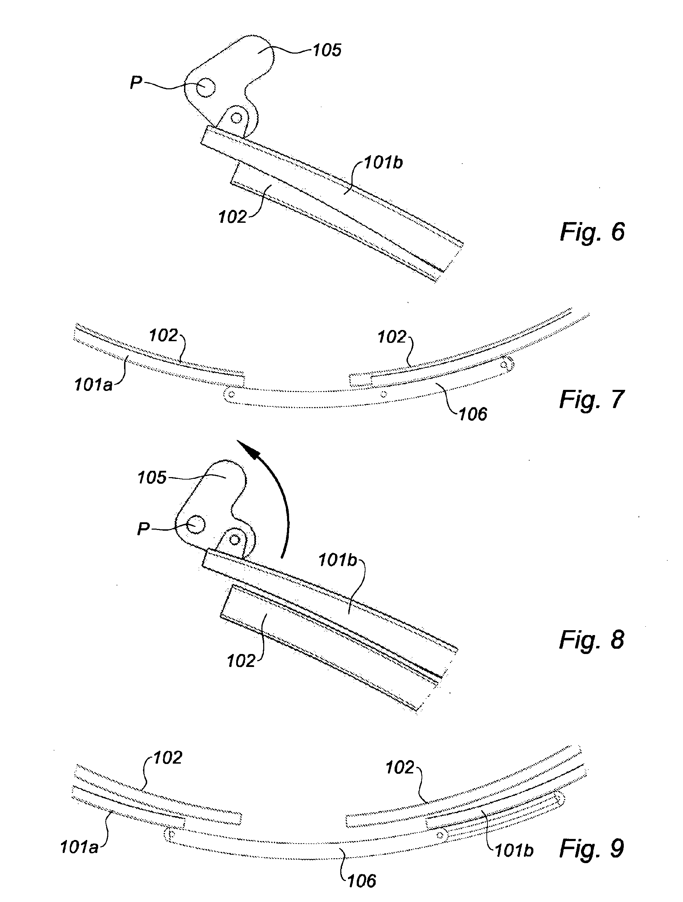

- la figure 6 est une vue partielle agrandie d'une extrémité pivotante d'une bride du dispositif de liaison selon l'invention en position fermée ;
- la figure 7 est une vue partielle agrandie d'une jonction coulissante entre deux brides de liaison du dispositif selon l'invention en position fermée ;
- les figures 8 et 9 sont similaires aux figures 6 et 7, le dispositif de liaison étant en position ouverte ;
- les figures 10, 11 ; 12, 13 et 14 montrent des variantes de réalisation de l'invention ;

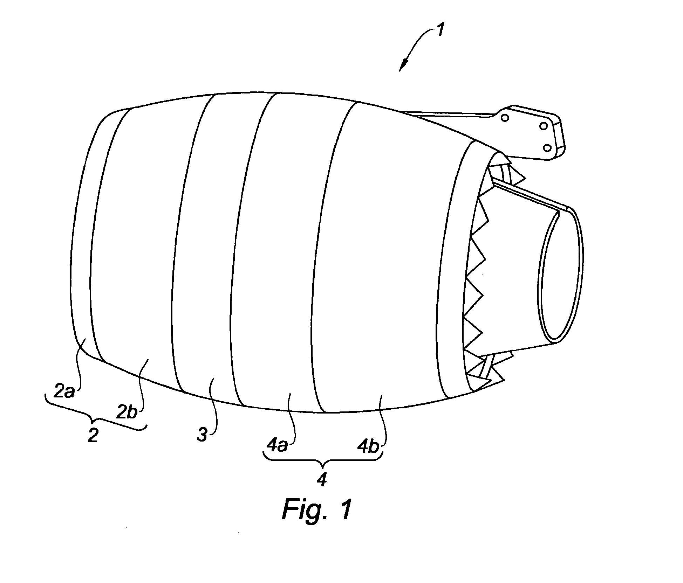

La figure 1 est une représentation schématique d'une nacelle 1 de turboréacteur.

La nacelle 1 constitue un logement sensiblement tubulaire pour un turboréacteur et comprend de manière générale, une section amont 2 d'entrée d'air, une section médiane 3 entourant une soufflante du turboréacteur et une section aval 4 entourant une chambre de combustion du turboréacteur.

La section amont 2 comprend classiquement une structure de lèvre d'entrée d'air 2a prolongée par une structure aval d'entrée d'air 2b.

La section médiane 3 entoure la soufflante et présente une paroi interne formée par un carter 3a de la soufflante.

La section aval 4 peut abriter un dispositif d'inversion de poussée 4b disposé dans le prolongement d'une section amont de rattachement 4a au reste de la nacelle, et notamment à la section médiane 3. Dans le cas d'une nacelle lisse, il n'y aura qu'une section amont de rattachement 4a couvrant toute la section aval 4.

Comme indiqué dans le préambule de la présente invention, il importe de pouvoir fixer de manière résistante la section aval 4 à la section médiane 3. Comme également expliqué, selon la configuration de la nacelle, il importe de pouvoir rattacher la section aval 4 et la section médiane 3 de manière démontable et autorisant notamment une ouverture par translation longitudinale de la section aval 4.

Le rattachement de la section aval 4 à la section médiane 3 s'effectue par l'intermédiaire d'un cadre avant 40 de la section aval 4 (et assurant notamment le support du dispositif d'inversion de poussée 4b le cas échéant) présentant une forme sensiblement annulaire.

Le rattachement du cadre avant 40 au carter de soufflante 3a est assuré par un dispositif de liaison selon l'invention.

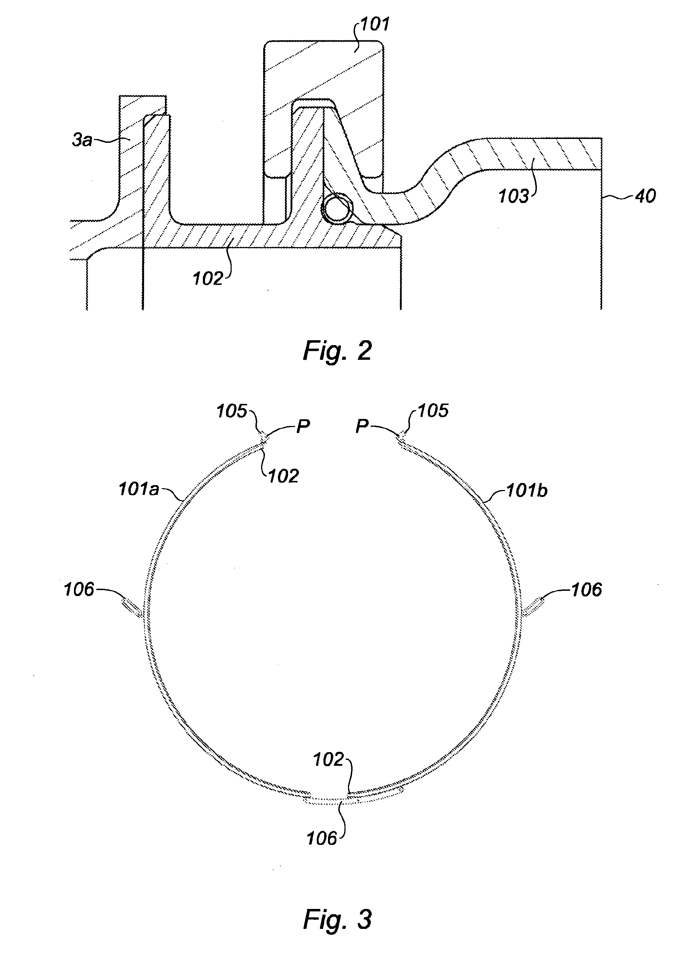

Comme visible sur les figures 2 et 3, un dispositif de liaison selon l'invention comprend :
- une bride de liaison 101,
- une pièce annulaire de réception 102 de la bride de liaison et solidaire du carter 3a de soufflante (classiquement appelée « J-ring » en raison de sa forme sensiblement en J présentant un retour d'extrémité avec lequel la bride 101 peut venir en prise),
- une pièce annulaire de réception 103 de la bride de liaison et solidaire du cadre avant 40 (également appelée « J-ring » pour les mêmes raisons).

Il convient de noter que les géométries de liaisons sont données à titre d'exemple et peuvent varier en fonction des efforts et des contraintes de sécurité : désengagement etc.

Plus précisément, comme cela est visible sur la figure 3, les pièces annulaires de réception 102 et 103 sont réalisées sous la forme de pièces annulaires sensiblement hémipériphériques afin de permettre la mise en place de poutres inférieures de support, par exemple, et de permettre en passage d'un pylône de rattachement et poutres de support à douze heures.

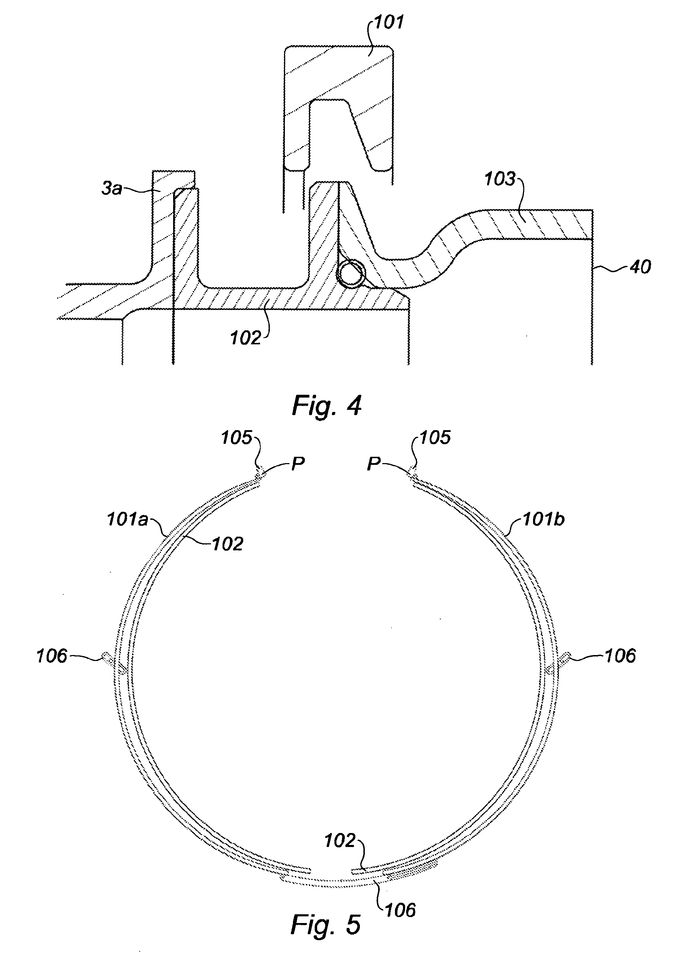

Conformément à l'invention, la bride de liaison 101 est réalisée en au moins deux secteurs de bride 101 a, 101 b, et chaque secteur 101 a, 101 b est monté mobile de manière pivotante entre une position d'engagement (figures 2 et 3) dans laquelle la bride 101 vient en prise avec la pièce annulaire 102 de réception du carter 3a de soufflante et la pièce annulaire 103 de réception du cadre avant 40 de manière à les lier, et une position d'ouverture (figures 4 et 5) dans laquelle la bride 101 est écartée radialement de la pièce annulaire 102 de réception du carter 3a de soufflante et de la pièce annulaire 103 de réception du cadre avant 40 de manière à permettre un écartement longitudinal du carter 3a de soufflante et du cadre avant 40.

Selon l'exemple représenté, la bride 101 comprend deux secteurs de bride 101 a, 101 b sensiblement hémi-périphérique.

Selon l'exemple représenté, les secteurs de bride 101 a, 101 b sont montés pivotants autour d'un axe P sensiblement longitudinal situé au niveau d'une extrémité supérieure dudit secteur de bride 101 a, 101 b.

Plus précisément, le mouvement de pivotement s'effectue par l'intermédiaire d'une roue 105, une extrémité du secteur 101 a, 101 b étant rattachée à la roue de manière légèrement excentrée par rapport à l'axe de pivotement P, de manière à assurer un bon dégagement de la bride 101.

L'exemple montre une bride 101 montée sur le cadre avant 40. Il est bien évidemment possible de prévoir de fixer la bride 101 sur le carter 3a.

De manière complémentaire, les secteurs de brides 101a, 101b sont associés chacun à une coulisse de guidage 106.

En outre, les secteurs de bride 101 a, 101 b sont avantageusement reliés par une jonction coulissante 106.

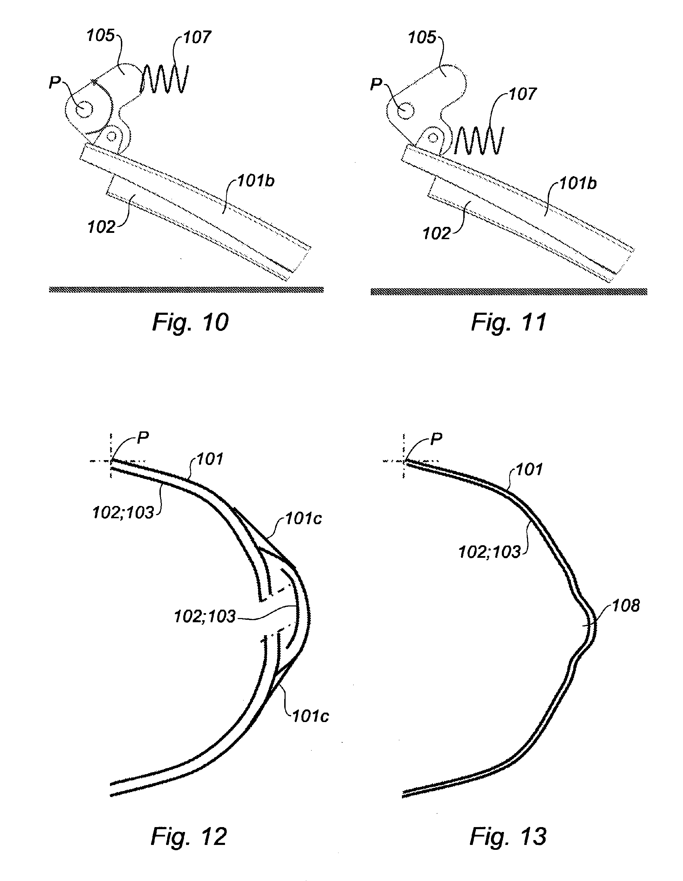

De manière complémentaire encore, comme cela est représenté sur les figures 10 et 11, les secteurs 101 a, 101b sont montés pivotants à l'encontre d'au moins un moyen de retour élastique tendant à aider le pivotement du secteur vers sa position écartée ou engagée. Ce moyen de retour élastique pourra être réalisé sous la forme de ressorts 107 associés à la roue 105 de pivotement.

La jonction coulissante 106 pourra également être équipée d'un système de serrage et maintien en position fermée (verrou, roue et vis sans fin, ...) et pourra être déverrouillée de manière manuelle ou motorisée. Il convient de noter qu'un système de roue et vis sans fin permettra un contrôle suffisamment précis de la cinématique d'ouverture de la bride tel que les coulisses de guidage 106 et les ressorts 107 ne sont plus utiles.

Il convient également de noter qu'il est possible de réaliser des accidents de forme dans les secteurs de bride 101 a, 101b de manière à permettre, par exemple, le passage d'équipements.

La figure 12 montre un accident de forme consistant à supprimer une zone des pièces annulaires 102, 103 pour le passage desdits équipements. La zone supprimée peut-être déportée. Des raccords 101 c assurent la continuité de la bride 101.

La figure 13 montre un deuxième exemple d'accident de forme consistant simplement à ménager un bossage 108 dans la bride 101 et les pièces annulaires 102, 103. La forme du bossage 108 doit bien évidemment permettre la rotation de la bride 101.

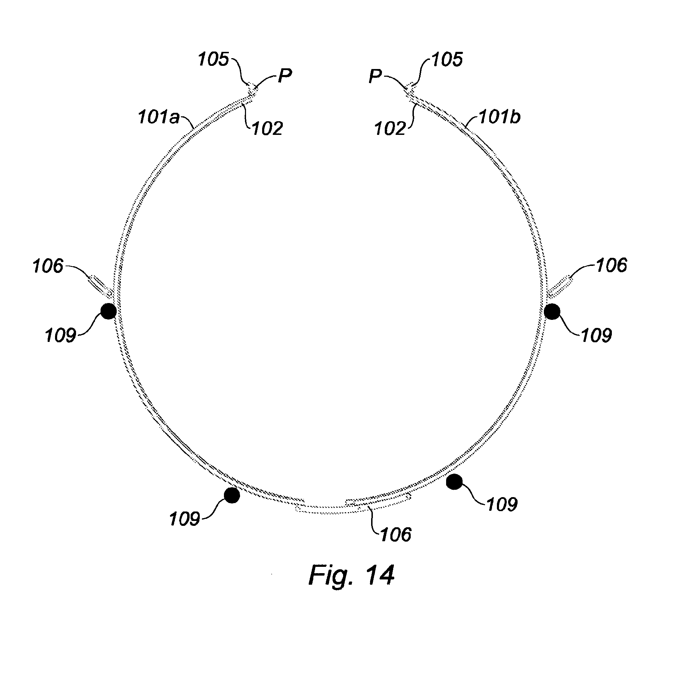

De manière complémentaire, et comme représenté schématiquement sur la figure 14, il est possible de prévoir des butées 109, notamment de type broche à bille ou verrou, mobiles entre une position d'engagement et une position de dégagement, ces butées 109 permettant d'éviter le désengagement de la bride 101 en cas de rupture de bride 101. Avec quatre butées 109 comme illustré, le désengagement en cas de rupture est de moins d'un quart de la circonférence de la bride 101.

Il convient également de noter que l'ouverture du système peut se faire par roue et vis ou verrou ou tout système équivalant.

En outre, l'anneau J-Ring peut tout à fait avoir une forme non circulaire en fonction de la forme périphérique de la jonction.

Par ailleurs, la liaison pourra être aussi située en zone aérodynamique et il conviendra alors d'ajouter un carénage externe assurant une bonne jonction aérodynamique entre les carénages de la partie cadre avant amont et de la partie aval.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de liaison d'un cadre avant (40) d'inverseur de poussée à un carter de soufflante (3a), comprenant :
- au moins une bride de liaison (101),
- une pièce annulaire de réception (102) de la bride de liaison et solidaire du carter de soufflante,
- une pièce annulaire de réception (103) de la bride de liaison et solidaire du cadre avant,
la bride de liaison étant réalisée en au moins deux secteurs de bride (101a, 101b), **caractérisé en ce que** chaque secteur est monté mobile de manière pivotante autour d'un axe (P) par l'intermédiaire d'une roue (105) à laquelle il est rattaché de manière pivotante et légèrement excentrée par rapport à l'axe de pivotement, entre une position d'engagement dans laquelle la bride vient en prise avec la pièce annulaire de réception du carter de soufflante et la pièce annulaire de réception du cadre avant de manière à les lier, et une position d'ouverture dans laquelle la bride est écartée radialement de la pièce annulaire de réception du carter de soufflante et de la pièce annulaire de réception du cadre avant de manière à permettre un écartement longitudinal du carter de soufflante et du cadre avant.

2. Dispositif de liaison selon la revendication 1 **caractérisé en ce que** l'axe de pivotement (P) est un axe sensiblement longitudinal situé au niveau d'une extrémité dudit secteur de bride.

3. Dispositif de liaison selon l'une quelconque des revendications 1 ou 2, **caractérisé en ce que** la bride (101) pivotante est montée sur le cadre avant (40).

4. Dispositif de liaison selon l'une quelconque des revendications 1 à 3, **caractérisé en ce que** la bride pivotante (101) est montée sur le carter de soufflante (40).

5. Dispositif de liaison selon l'une quelconque des revendications 1 à 4, **caractérisé en ce que** le secteur de bride (101 a, 101b) mobile est associé à au moins une coulisse de guidage (106).

6. Dispositif de liaison selon l'une quelconque des revendications 1 à 5, **caractérisé en ce que** la bride de liaison (101) est réalisée en deux secteurs (101 a, 101 b) sensiblement hémi-périphériques.

7. Dispositif de liaison selon l'une quelconque des revendications 1 à 6, **caractérisé en ce que** les secteurs (101a, 101b) sont reliés par une jonction coulissante (106).

8. Dispositif de liaison selon l'une quelconque des revendications 1 à 7, **caractérisé en ce que** les secteurs (101a, 101b) sont montés pivotants à l'encontre d'au moins un moyen de retour élastique, (107) tendant à aider le pivotement du secteur vers sa position écartée ou engagée.

9. Ensemble propulsif comprenant un turboréacteur logé à l'intérieur d'une nacelle (1), ladite nacelle comportant une section aval (4) rattaché à un carter de soufflante (3a) du turboréacteur à l'aide d'au moins un dispositif de liaison selon l'une quelconque des revendications 1 à 8.

## Patentansprüche

1. Vorrichtung zur Verbindung eines Schubumkerhvorrichtungs-Frontrahmens (40) mit einem Lüftergehäuse (3a), umfassend
- mindestens einen Verbindungsflansch (101)
- ein ringförmiges Aufnahmestück (102) des Verbindungsflansches und fest verbunden mit dem Lüftergehäuse,
- ein ringförmiges Aufnahmestück (103) des Verbindungsflansches und fest verbunden mit dem Frontrahmen,
wobei der Verbindungsflansch aus mindestens zwei Flanschabschnitten (101 a, 101b) hergestellt ist, **dadurch gekennzeichnet, dass** jeder Abschnitt beweglich auf drehbare Weise um eine Achse (P) mit Hilfe eines Rads (105) montiert ist, an das er auf drehbare Weise und leicht exzentrisch mit Bezug auf die Drehachse zwischen einer Eingriffsposition, in der der Flansch mit dem ringförmigen Aufnahmestück des Lüftergehäuses und dem ringförmigen Aufnahmestück des Frontrahmens in Eingriff kommt, um sie zu verbinden, und einer Öffnungsposition befestigt ist, in der der Flansch vom ringförmigen Aufnahmestück des Lüftergehäuses und dem ringförmigen Aufnahmestück des Frontrahmens radial beabstandet ist, um eine längs gerichtete Beabstandung des Lüftergehäuses und des Frontrahmens zu ermöglichen.

2. Vorrichtung nach Anspruch 1, **dadurch gekennzeichnet, dass** die Drehachse (P) eine im Wesentlichen längs gerichtete Achse ist, die sich auf der Ebene eines Endes des Flanschabschnitts befindet.

3. Vorrichtung nach einem der Ansprüche 1 oder 2, **dadurch gekennzeichnet, dass** der Drehflansch (101) auf dem Frontrahmen (40) montiert ist.

4. Vorrichtung nach einem der Ansprüche 1 bis 3, **dadurch gekennzeichnet, dass** der Drehflansch (101) auf dem Lüftergehäuse (40) montiert ist.

5. Verbindungsvorrichtung nach einem der Ansprüche 1 bis 4, **dadurch gekennzeichnet, dass** der bewegliche Flanschabschnitt (101a, 101b) mit mindestens einer Führungskulisse (106) assoziiert ist.

6. Verbindungsvorrichtung nach einem der Ansprüche 1 bis 5, **dadurch gekennzeichnet, dass** der Verbindungsflansch (101) in zwei im Wesentlichen semiperipheren Abschnitten (101a, 101b) hergestellt ist.

7. Verbindungsvorrichtung nach einem der Ansprüche 1 bis 6, **dadurch gekennzeichnet, dass** die Abschnitte (101a, 101b) durch eine gleitende Verbindung (106) verbunden sind.

8. Verbindungsvorrichtung nach einem der Ansprüche 1 bis 7, **dadurch gekennzeichnet, dass** die Abschnitte (101a, 101b) drehend gegen mindestens ein elastisches Rückstellmittel montiert sind, (107) das dazu neigt, die Drehung des Abschnitts in seine beabstandete oder eingegriffene Position zu unterstützen.

9. Antriebseinheit, umfassend ein Turbinen-Luftstrahl-Triebwerk, das im Inneren einer Gondel (1) untergebracht ist, wobei die Gondel einen nachgelagerten Abschnitt (4) aufweist, der an ein Lüftergehäuse (3a) des Turbinen-Luftstrahl-Triebwerks mit Hilfe von mindestens einer Verbindungsvorrichtung nach einem der Ansprüche 1 bis 8 befestigt ist.

## Claims

1. A device for connecting a thrust reverser front frame (40) to a fan casing (3a), comprising:
- at least one linking flange (101),
- an annular part (102) for receiving the linking flange and secured to the fan casing,
- an annular part (103) for receiving the linking flange and secured to the front frame,
the linking flange being made from at least two flange sectors (101a, 101b), **characterized in that** each sector is movably mounted pivotably around an axis (P) by means of a wheel (105), being pivotably attached to the wheel slightly off-centered with respect to the pivot axis, between an engaged position in which the flange engages with the annular receiving part of the fan casing and the annular receiving part of the front frame so as to connect them, and an open position in which the flange is radially separated from the annular receiving part of the fan casing and the annular receiving part of the front frame so as to allow the fan casing and the front frame to be separated longitudinally.

2. The connecting device according to claim 1, **characterized in that** the pivot axis (P) is a substantially longitudinal axis situated at one end of said flange sector.

3. The connecting device according to any one of claims 1 or 2, **characterized in that** the pivoting flange (101) is mounted on the front frame (40).

4. The connecting device according to any one of claims 1 to 3, **characterized in that** the pivoting flange (101) is mounted on the fan casing (40).

5. The connecting device according to any one of claims 1 to 4, **characterized in that** the movable flange sector (101a, 101b) is associated with at least one sliding guide element (106).

6. The connecting device according to any one of claims 1 to 5, **characterized in that** the linking flange (101) is connected to two substantially semi-peripheral sectors (101 a, 101b).

7. The connecting device according to any one of claims 1 to 6, **characterized in that** the sectors (101a, 101b) are connected by a sliding junction (106).

8. The connecting device according to any one of claims 1 to 7, **characterized in that** the sectors (101 a, 101 b) are pivotably mounted against at least one elastic return means (107) tending to assist the pivoting of the sector towards its separated or engaged position.

9. A propulsion assembly comprising a turbojet engine housed inside a nacelle (1), said nacelle including a downstream section (4) connected to a fan casing (3a) of the turbojet engine using at least one connecting device according to any one of claims 1 to 8.
